# EUROPEAN PATENT APPLICATION

(11) **EP 4 234 451 A2**
(43) Date of publication of application: **30.08.2023**
(21) Application number: 23157734.7
(22) Date of filing: 21.02.2023
(51) Int. Cl.: B65G 35/06, B23Q 7/14, B27D 5/00, B27M 1/08, B65G 37/02, B65G 54/02

(54) **MACHINE WITH A PIECE HANDLING SYSTEM AND OPERATING METHOD OF SUCH MACHINE**

(30) Priority: 25.02.2022 IT 202200003545
(71) Applicant: SCM Group S.p.A., 47921 Rimini (RN) (IT)
(72) Inventor: PORNARO, Diego, 47921 RIMINI (RN) (IT)
(74) Representative: Tiburzi, Andrea

(57) **Abstract**

The present invention relates to a Machine (1) for machining pieces, such as panels (P) made of wood, plastic, glass, glass fiber, metal, ceramic and the like, comprising a handling system (2) of the pieces (P) comprising an advancement line (21), for the movement along an advancement direction (A) of each piece (P) to be machined, and one or more machining units (11, 12, 13, 14, 15, 16, 17, 18), for machining the pieces (P) while they are moved along said advancement line (21), characterized in that said advancement line (21) comprises one or more series coupled transport modules (211), wherein each transport module (211) comprises a sliding guide (2112) and a transport skid (2113), slidingly coupled to said sliding guide (2112), for transporting a respective piece (P) to be machined by means of said one or more machining units (11, 12, 13, 14, 15, 16, 17, 18).

## Description

The present invention relates to a machine with a piece handling system.

The present invention also relates to an operating method of this machine.

### Field of invention

More specifically, the invention relates to a machine comprising a system of the aforementioned type, designed and manufactured in particular for handling panels to be worked inside so-called pass-through machines, but which can be used for other types of machines.

In the following, the description will be directed to edge-banding machines for panels, but it is quite evident that the same should not be considered limited to this specific use.

### Prior art

As is well known, there are currently machines for performing processes on workpieces, such as, for example, panels, of the passage through type, i.e. in which the panels move in series along an advancement direction to be subjected to one or more machining.

In these machines, handling systems are implemented, which allow these panels to be moved in an advancement direction to perform the various processes. To date, handling systems include chain and/or tracking devices. These systems have a closed annular shape and transport the panels along said advancement direction, from an inlet, into which they are loaded, to an outlet, into which they are unloaded.

A first drawback of these handling solutions is the low precision, which distinguishes them, which entails low precision of the workings performed on the handled panels.

A further disadvantage is the need to have a panel recovery system, arranged downstream of the handling system, with respect to the forward direction, to recover the panels once they reach the exit.

Another disadvantage of these solutions is the need to be redesigned for each different implementation, as the length of the chain and/or the track devices must be adapted to the needs of the specific implementation. Therefore, the possible re-adaptation of a machine does not appear to be possible from a design point of view.

Another disadvantage of the solutions for handling the panels in the passing through machines according to the prior art is given by the so-called polygonal effect, i.e. the variation in the forward speed of the transported panels caused by the coupling of the chains or tracks with the respective handling means.

The machining machines described have the problem of not being modular. In other words, they cannot be divided into machine portions, provided with their base, on which to mount the unit and be able to adjust it independently, and with an electric module, so that the unit is already wired and functioning.

One of the reasons why the handling or dragging systems cannot be modular and therefore adaptable is given by the fact that all the references of the chain shoulder and presser are missing. Chain shoulder and presser are today a constraint and limit for edge banding machines (and for the passing through machines in general) since these machines are made up of a single welded side member, which must be custom built, based on the length of the machine, with very long production lead time.

The panel transport system according to the prior art, which as mentioned is made by means of a crawler, is composed of a complex system of skids and chain links made up of custom-designed sintered pieces, which require very precise machining and assembly.

Furthermore, a considerable problem with the chain is that it suffers from the polygonal effect due to the pitch of the chain and the driving pinion, with the consequent production of vibrations, which are transmitted to the panel and to the operating groups to the detriment of the final quality of the panel.

### Scope of the invention

In light of the above, the object of the present invention is to provide a machine comprising a movement system that is precise and reliable and at the same time modular.

Another object of the present invention is to propose a handling system, which allows the construction of possibly modifiable modular machines.

A further object of the present invention is to provide a movement system capable of managing and moving the machined pieces.

Another object of the present invention is to provide an operating method for this machine.

### Object of the invention

It is, therefore, specific object of the present invention a machine for machining pieces, such as panels made of wood, plastic, glass, glass fiber, metal, ceramic and the like, comprising a handling system of the pieces comprising an advancement line, for the movement along an advancement direction of each piece to be machined, and one or more machining units, for machining the pieces while they are moved along said advancement line, characterized in that said advancement line comprises one or more series coupled transport modules, wherein each transport module comprises a sliding guide and a transport skid, slidingly coupled to said sliding guide, for transporting a respective piece to be machined by means of said one or more machining units.

Always according to the invention, each of said transport modules may comprise a base support, on which said sliding guide is arranged.

Still according to the invention, said transport skid may be moved by means of a linear motor.

Advantageously according to the invention, said sliding guide may be made by means of sliding belts.

Preferably according to the invention, said sliding guide may be of the magnetic and/or pneumatic and/or hydraulic type.

Always according to the invention, each transport skid may comprise a gripping device, which allows the piece fixed to the skid to be held in position while handling.

Still according to the invention, said gripping device may comprise a vacuum sucker.

Preferably according to the invention, said handling system may comprise a return line of said transport skids, which moves the transport skids in a return direction, parallel and opposite to said advancement direction of the pieces to be machined, a first movement system, arranged at the end of said advancement line, on which the pieces to be machined are loaded, having at least one movable arm, provided with blocking means for taking the transport skids fed by said return line and arranging them on the sliding guide of the transporting first module of the advancement line, and a second handling system, arranged at the end of the advancement line, from which the pieces machined by said one or more working units are picked up, having at least one movable arm provided with gripping means for taking the transport skids from the sliding guide of the last transport module of the advancement line and move them on said return line.

Advantageously according to the invention, said return line may be arranged alternatively below or laterally to said advancement line.

Further according to the invention, said return line may comprise a transport unit, such as a conveyor belt or rollers, or a chain for transporting the transport skids coming from the advancement line.

Always according to the invention, said machine may comprise a cross member arranged non-parallel or transversal with respect to said advancement line, in correspondence with at least one transport module, which can be moved along said cross member, wherein a replacement transport module can be positioned on said cross member, which can be moved so as to be positioned in place of said transport module on said advancement line.

Still according to the invention, said machine may be an edge-banding machine and comprises one or more of the machining units indicated in the following group: grinding unit; and/or unit for gluing an edging tape; and/or end trimming unit of said edging tape; and/or edge trimming unit of said edging tape; and/or chanfering unit of said edging tape; and/or rounding unit of said edging strip; and/or spindle moulder unit; and/or finishing unit.

It is further object of the present invention a method of operating of a machine for machining workpieces, such as panels made of wood, plastic, glass, fiberglass, metal, ceramic and the like, comprising the following steps: A. arranging a workpiece on a transport skid movable along an advancement line of a handling system; B. moving a piece along said advancement direction by means of said advancement line; C. machining said piece by means of one or more machining units; D. picking up said transport skid from said advancement line; E. moving said transport skid in a return direction, parallel and opposite to said advancement direction of the pieces to be machined by means of a return line; and F. picking up said transport skid from said return line to said advance line.

### Brief description of the figures

The present invention will be now described, for illustrative but not limitative purposes, according to its preferred embodiments, with particular reference to the figures of the enclosed drawings, wherein:
figure 1 shows an edge-banding machine in line with a movement system according to the present invention;
figure 2 shows a basic diagram of a movement system according to the present invention;
figure 3 shows a first embodiment of a movement system according to the present invention;
figure 4 shows a structural detail of figure 3;
figure 5 shows a second handling system according to the present invention;
figure 6 shows a second handling system according to the present invention;
figure 7 shows a diagram of the second movement system according to figure 5;
figure 8 shows a third embodiment of the movement system according to the present invention;
figure 9 shows the movement system according to the present invention of figure 8 in an operating mode; and
figure 10 shows the movement system according to the present invention of figure 8 in an operating mode.

### Detailed description

In the various figures, similar parts will be indicated with the same reference numbers.

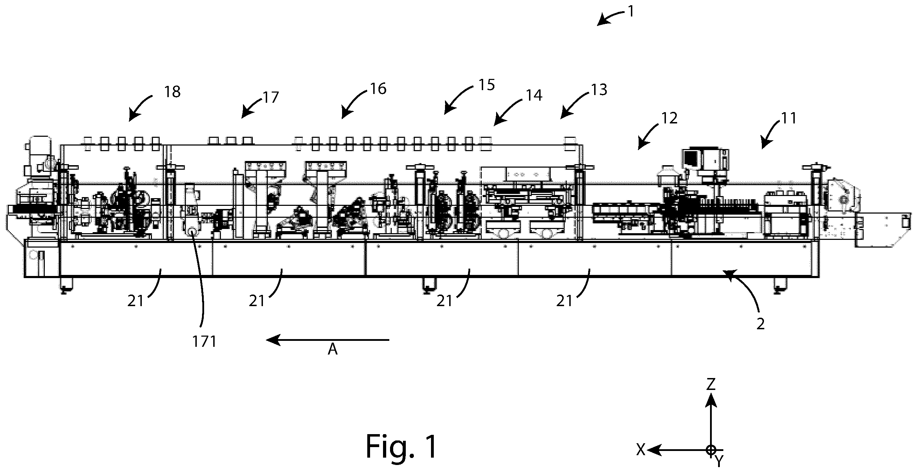

With reference to figure 1, it is possible to observe a first embodiment of an in-line edge-banding machine 1 for edge-band pieces P made of wood, plastic, glass, fiberglass, metal, ceramic, and the like, such as for example panels P.

The in-line edge-banding machine 1 comprises a plurality of machining groups, arranged in series along the advancement axis A, to perform one or more machining on the panels P.

In the embodiment shown, the in-line edge-banding machine 1 comprises a grinding unit 11, for grinding the panels P, for example, wooden panels, which may have an irregular surface as a result of the machining performed previously, which may also affect the edges, and a gluing unit 12, for applying glue to the side edges of the panel and/or to the edging tape to be applied.

The gluing unit 12 generally has pressing members to allow the adhesion of the glue. Following the gluing of the edging tape, for cutting any excess of the tape itself with respect to the lateral surfaces of the panel P to which it is applied, a trimming unit 13 is provided, equipped with blades or cutters for cutting said excess. Subsequently, the panel P is treated with an edge trimming unit 14, a chanfering unit 15, and a rounding unit 16, the edge trimming unit 14 and the former has rotating cutting members for eliminating any sharp edges.

Instead, the rounding unit 16 is equipped with a cutter for rounding the edges.

Downstream of the gluing unit 15, there is the spindle moulder unit 17, which comprises a spindle moulder 171, which is an electric motor-driven tool, in particular, it is a type of milling machine, used in woodworking for profiling wooden panels (or chipboard), to obtain milled sections on a panel P. Finally, there is the finishing unit 18.

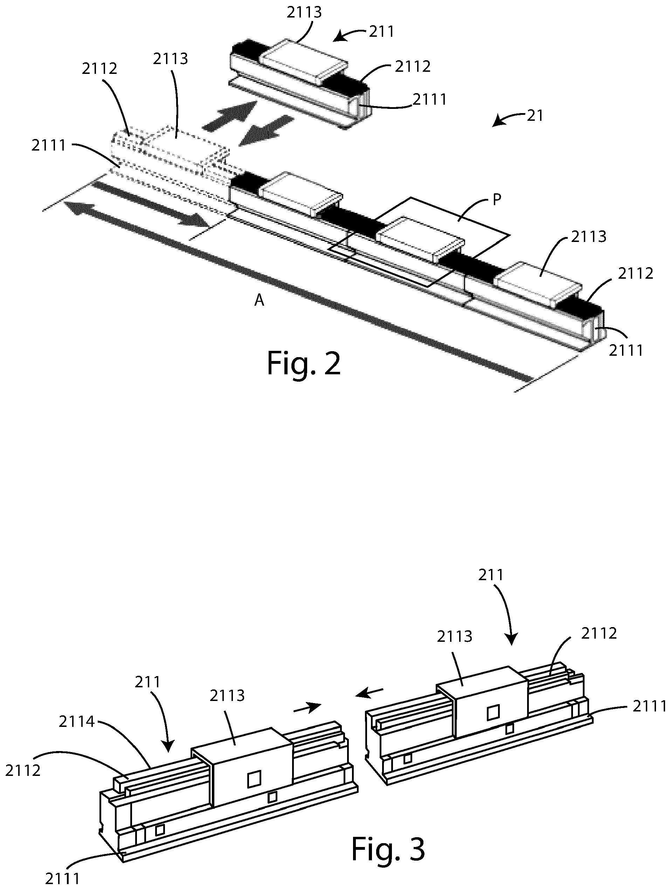

The in-line edge-banding machine 1 also comprises a piece handling system 2, for transporting the pieces P to be machined, which provides, with reference to figures 2, 3, and 4 (showing a first embodiment), an advancement line 21 and a return line 22. The advancement line 21 is intended for the transport of the pieces P.

The advancement line 21 comprises a plurality of transport modules 21, capable of transporting the pieces P to be machined.

With particular reference to figure 2, it can be seen that the movement system 2 is of the linear type and comprises a plurality of transport modules 211. Each transport module 211 can be assembled with another, offering much greater flexibility, speed, and acceleration with respect to the tracked or chain systems of the prior art.

Each transport module 211 comprises a longitudinal base support 2111, a sliding guide 2112, arranged on top of said base support 2111, and a transport skid 2113, slidingly coupled to said sliding guide 2112.

In some embodiments, the sliding guide 2112 is made by means of sliding belts 2114. In other embodiments, the sliding guide 2112 can be of the magnetic, pneumatic, or hydraulic type.

Furthermore, each transport module 211 comprises sensors that detect the position of the piece P to be machined.

Finally, consider that when a transport skid 2113 is moved by a module 211, it passes on the sliding guide 2112 of the adjacent one, which therefore drags it in turn, always in the advancement direction A.

Said transport skid 2113 is intended to support the panels P to be moved. Each transport skid 2113 is therefore moved by a linear electric motor (not visible in the figure), as defined above.

Furthermore, each transport skid 2113 comprises at the top some vacuum suckers (not shown in the figure), or a different vacuum system (not shown in the figure), which allows the piece P to be held in position, fixed on the skid during movement. In other embodiments, further known blocking systems of the workpieces (not shown in the figures) can be installed, such as by way of example clamps.

As can be seen both in figure 2 and in greater detail in figure 3, the arrangement in series or in line of the modules 211 takes place by coupling one end of a base support 2111 to one end of the next, so that the sliding guides 2112 of the two modules form a single combined guide, on which the transport skid 2113 can slide, to pass, without interruption, from one module 211 to the next, as mentioned above.

In figure 2 it is possible to observe how a module 211 is added or replaced to the series of modules 211. In particular, the modularity of the piece handling system 2 can be observed, which can be extended or reduced rapidly, allowing a very quick adaptation to the layout of the machine to be created, according to the working units to be installed or eventually removed.

The pieces P are moved in the advancement direction A, which is directed like the X axis of the Cartesian axis system shown in figure 2.

The movement system 2 also comprises a return line 22 of the transport skids 2113. Said return line 22 moves the transport skids 2113 in a return direction R, parallel and opposite to that of the advancement direction A of the panels or pieces P to be machined, therefore always directed according to the X axis, but oriented in the opposite way with respect to it, to pick them up at the end of the line of transport modules 21, returning them to the beginning of the same.

In some embodiments, said return line 22 can be arranged laterally, therefore it would always lie on the X-Y plane of the Cartesian coordinate system shown in the figure, however, in other embodiments, said return line 22 can be arranged below the line of the transport modules 21, therefore it would lie on the X-Z plane of the Cartesian coordinate system shown in the figure.

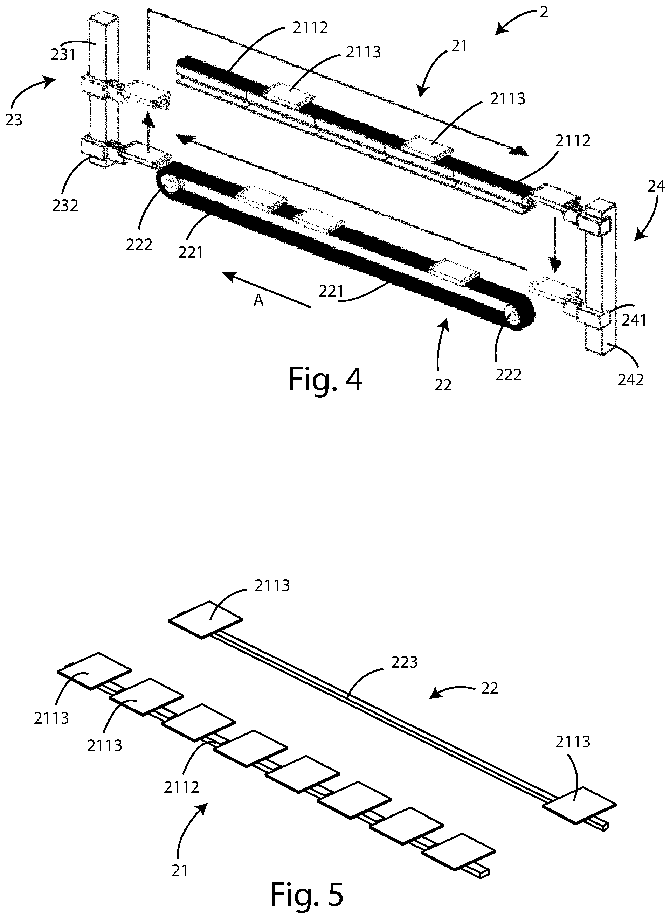

In particular, with reference to figure 4, a return line 22 of the transport skids 2113 parallel to the advancement line 21 and arranged above can be observed.

The return line 22 comprises a conveyor belt 221, for transporting the transport skid 2113 coming from the advancement line 21, and a pair of rollers 222, arranged so as to move said conveyor belt 221.

The movement system 2 also comprises a first movement system 23, in particular Cartesian, arranged perpendicular to the linear system. In further embodiments said handling system 23 can be of another type, such as for example a robot. Said movement system 2 is arranged at the beginning of the advancement line 21, having a support frame 231 and at least one mobile arm 232, in turn, provided with means for blocking the piece P, such as a gripper or suction cups (not shown in the figure), to take the transport skids 2113 fed by said return line 22 and arrange them on the sliding guide 2112 of the first transport module 211 of the advancement line 21.

The handling system 2 also comprises a second handling system 24, arranged at the end of the advancement line 21, having a support frame 241 and at least one movable arm 242 also provided with gripping means, such as a gripper or suction cups (not shown in the figure), to take the transport skids 2113 from the sliding guide 2112 of the last transport module 211 of the advancement line 21 and move them on the conveyor belt 221 of said return line 22.

In this way, the transport skids 213 can be moved from the advancement line 21 to the return line 22.

The operation of the in-line edge-banding machine 1, object of the present invention, is as follows.

When it is intended to machine one or more panels P in said in-line edge-banding machine 1, an operator loads each panel P onto a transport skid 213 of said advancement line 21. In particular, each panel P is fixed to the respective transport skid 213 with said locking means.

In some embodiments, the panels P are loaded onto said transport skids 213 of said advancement line 21 through a loading system (not shown in the figures).

Each panel P is moved by the respective skid 2113, driven by the linear motor of each transport module 211.

During the advancement, the working units 11, 12, 13, 14, 15, 16, 17, and 18 carry out the predetermined workings on said panels P. During the workings, the panel P is moved in the advancement direction A.

Once the skid reaches the final part of the line (or, in the present embodiment, it carries out the last machining given by the finishing unit 18), and once the suitably edged (or worked in general) panel P has been picked up from the respective transport skid 2113, the second handling system 24 picks up the transport skid 2113 and places it on the conveyor belt 221.

The conveyor belt 221 moves the transport skid 2113 in the return direction R, which, as mentioned, is parallel but opposite to the advancement direction A, returning the panel P to the initial position of the advancement line 21. At this point, the first movement system 23 picks up each transport skid 2113 fed by said return line 22, by means of said conveyor belt 221, arranging them on said sliding guide 2112 of the first transport module 211 of the advancement line 21.

The machined panel P can be moved again along said advancement direction A, to undergo further machining by said working units 1.

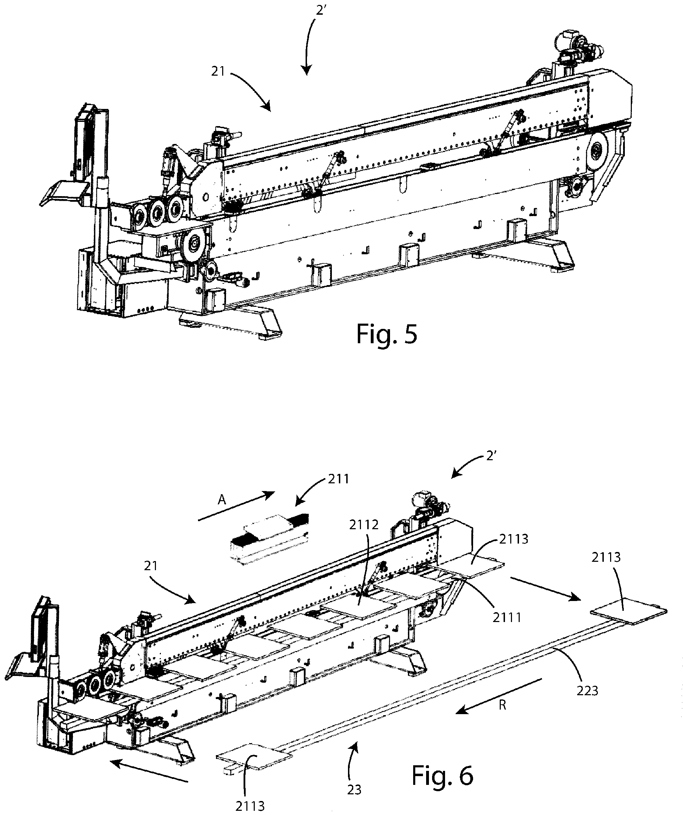

With reference now to figures 5, 6, and 7, a second embodiment of the advancement system 2' can be observed, in which it can be seen that the return line 22 is arranged parallel to said advancement line 21.

In particular, in this case, the return line 22 is arranged as mentioned parallel to the advancement line 21. In this case, the piece handling system 2 will have Cartesian handling systems (not shown in the figures), which will pick up the transport skids 2113 from the advancement line 21 and will place them in the return line 22, to bring them back to the beginning of the advancement line 21.

In this case, the return line 22 has a possible modular sliding guide 223.

The circular path of the transport skids 2113 can be clearly observed, which travel along the advancement direction A, translate perpendicularly towards the return direction R, having a direction parallel but in the opposite direction to said advancement direction A, to be fed again at the entrance to the advancement line 21.

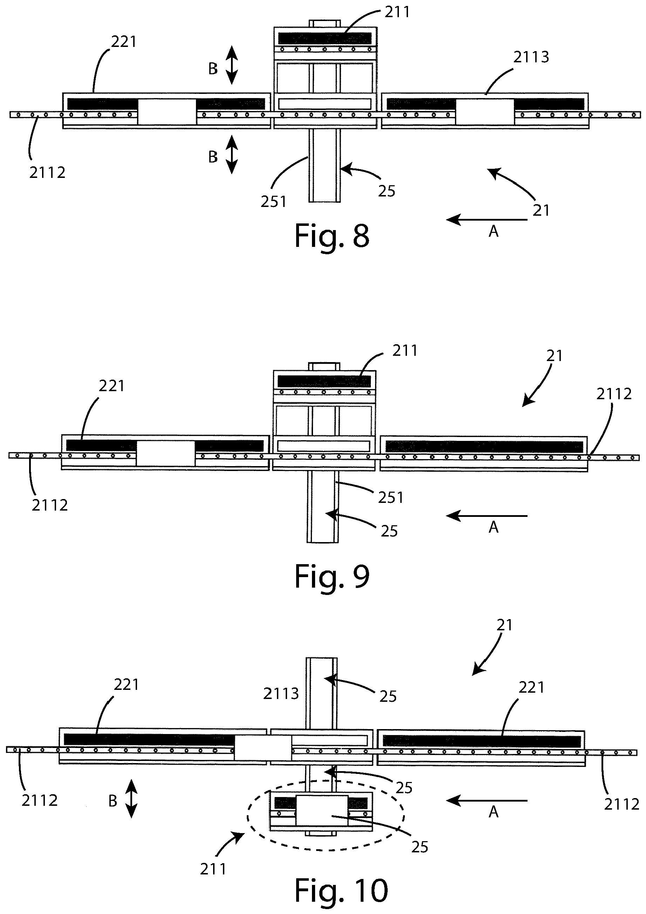

In a further third embodiment, shown in particular in figures 8, 9, and 10, in the series of modules 211, one or more modules 211 of the same series can be arranged on a cross member 25 oriented perpendicularly or transversely with respect to the advancement direction A.

On said cross member 25 at least two modules 211 are arranged, which, thanks to a guide, are able to translate on the cross member 25 itself along a direction B, perpendicular to said advancement direction A. The translation of said two modules 211 on the cross member 25 alternatively allows to said two modules 211 to occupy a position within the series of modules 211. In other words, it is, therefore, possible to exclude a module 211 with the relative transport skid 2113 for needs of reorganization of production batches, or in order to carry out maintenance on the module 211 excluded, without having to stop the production, replacing it with another similar module 211.

More specifically, as it can be seen, in figure 8 there is the regular operation of the advancement line 21.

When it is necessary to replace the transport module 211 arranged in correspondence with the cross member 25 (see figure 9) the module to be replaced is moved downwards in the transversal direction B along the cross member 25 itself. At the same time, the transport module 211 previously off the line is inserted into the line always by sliding along the cross member 25. In this way, as can be seen in figure 10, the transport module 211 extracted (highlighted with a dashed circle) can be subjected to maintenance or repair.

### Advantages

An advantage of the present invention is the possibility of having a machine comprising a precise and reliable movement system.

A further advantage of the present invention is the possibility of having a handling system able to manage and move the machined pieces.

A further advantage of the handling system according to the present invention is that of eliminating the upper presser since the panel can be held by means of suction cup systems and moved without any upper holding system.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (1) for machining pieces, such as panels (P) made of wood, plastic, glass, glass fiber, metal, ceramic and the like, comprising
a handling system (2) of the pieces (P) comprising an advancement line (21), for the movement along an advancement direction (A) of each piece (P) to be machined, and
one or more machining units (11, 12, 13, 14, 15, 16, 17, 18), for machining the pieces (P) while they are moved along said advancement line (21),
**characterized**
**in that** said advancement line (21) comprises one or more series coupled transport modules (211),
wherein each transport module (211) comprises
a sliding guide (2112) and
a transport skid (2113), slidingly coupled to said sliding guide (2112), for transporting a respective piece (P) to be machined by means of said one or more machining units (11, 12, 13, 14, 15, 16, 17, 18).

2. Machine (1) according to the preceding claim, **characterized in that** each of said transport modules (211) comprises a base support (2111), on which said sliding guide (2112) is arranged.

3. Machine (1) according to any one of the preceding claims, **characterized in that** said transport skid (2113) is moved by means of a linear motor.

4. Machine (1) according to the preceding claim, **characterized in that** said sliding guide (2112) is made by means of sliding belts (2114).

5. Machine (1) according to claim 3, **characterized in that** said sliding guide (2112) is of the magnetic and/or pneumatic and/or hydraulic type.

6. Machine (1) according to any one of the preceding claims, **characterized in that** each transport skid (2113) comprises a gripping device, which allows the piece (P) fixed to the skid to be held in position while handling.

7. Machine (1) according to the preceding claim, **characterized in that** said gripping device comprises a vacuum sucker.

8. Machine (1) according to any one of the preceding claims, **characterized in that** said handling system (2) comprises
a return line (22) of said transport skids (2113), which moves the transport skids (2113) in a return direction (R), parallel and opposite to said advancement direction (A) of the pieces (P) to be machined,
a first movement system (23), arranged at the end of said advancement line (21), on which the pieces (P) to be machined are loaded, having at least one movable arm (232), provided with blocking means for taking the transport skids (2113) fed by said return line (22) and arranging them on the sliding guide (2112) of the transporting first module (211) of the advancement line (21), and
a second handling system (24), arranged at the end of the advancement line (21), from which the pieces (P) machined by said one or more working units (11, 12, 13, 14, 15, 16, 17, 18) are picked up, having at least one movable arm (242) provided with gripping means for taking the transport skids (2113) from the sliding guide (2112) of the last transport module (211) of the advancement line (21) and move them on said return line (22).

9. Machine (1) according to claim 8, **characterized in that** said return line (22) is arranged alternatively below or laterally to said advancement line (21).

10. Machine (1) according to any one of the preceding claims, **characterized in that** said return line (22) comprises a transport unit, such as a conveyor belt (221) or rollers, or a chain for transporting the transport skids (2113) coming from the advancement line (21).

11. Machine (1) according to any one of the preceding claims, **characterized in that** it comprises a cross member (25) arranged non-parallel or transversal with respect to said advancement line (21), in correspondence with at least one transport module (211), which can be moved along said cross member (25),
wherein a replacement transport module (211) can be positioned on said cross member (25), which can be moved so as to be positioned in place of said transport module (211) on said advancement line (21).

12. Machine (1) according to any one of the preceding claims, **characterized in that** it is an edge-banding machine and comprises one or more of the machining units indicated in the following group:
- grinding unit (11); and/or
- unit for gluing an edging tape (12); and/or
- end trimming unit (13) of said edging tape; and/or
- edge trimming unit (14) of said edging tape; and/or
- chanfering unit (15) of said edging tape; and/or
- rounding unit (16) of said edging strip; and/or
- spindle moulder unit (17); and/or
- finishing unit (18).

13. Method of operating of a machine for machining workpieces, such as panels (P) made of wood, plastic, glass, fiberglass, metal, ceramic and the like, comprising the following steps:
A. arranging a workpiece on a transport skid (2113) movable along an advancement line (21) of a handling system (2);
B. moving a piece (P) along said advancement direction (A) by means of said advancement line (21);
C. machining said piece (P) by means of one or more machining units (11, 12, 13, 14, 15, 16, 17, 18);
D. picking up said transport skid (2113) from said advancement line (21);
E. moving said transport skid (2113) in a return direction (R), parallel and opposite to said advancement direction (A) of the pieces (P) to be machined by means of a return line (22); and
F. picking up said transport skid (2113) from said return line (22) to said advance line (21).
